# EUROPEAN PATENT APPLICATION

(11) **EP 4 793 116 A1**
(43) Date of publication of application: **19.08.2026**
(21) Application number: 25158194.8
(22) Date of filing: 17.02.2025
(51) Int. Cl.: B60T 8/1755, B60W 10/184, B60W 30/045, B60W 30/18

(54) **METHOD, APPARATUS AND SYSTEM FOR IMPROVING STABILITY OF DIRECTIONAL CORNERING OF VEHICLE USING TORQUE-SENSITIVE LIMITED SLIP DIFFERENTIAL AND TORQUE VECTORING BY-BRAKE**

(71) Applicant: Hyundai Mobis Co., Ltd., Gangnam-gu Seoul 06141 (KR)
(72) Inventor: PINTO, Lorenzo, 60316 Frankfurt am Main (DE)
(74) Representative: Vossius & Partner Patentanwälte Rechtsanwälte mbB

(57) **Abstract**

A method, an apparatus and a system for improving the stability of directional cornering of a vehicle by using a torque-sensitive limited slip differential (LSD) and torque vectoring by-brake are provided. According to the present disclosure, a method executed by a vehicle control device, the method includes activating torque vectoring by-brake control when a vehicle accelerates at a corner, calculating an actual differential slip of the vehicle and a threshold value, comparing the actual differential slip with the threshold value, maintaining the activation of the torque vectoring by-brake control when the actual differential slip is smaller than the threshold value and calculating traction inside a wheel of the vehicle and a traction threshold value when the actual differential slip is not smaller than the threshold value, and determining whether to activate the torque vectoring by-brake control based on the traction inside the wheel and the traction threshold value.

## Description

### TECHNICAL FIELD

The present disclosure relates to a method, apparatus and system for improving the stability of directional cornering of a vehicle by using a limited slip differential (LSD) and torque vectoring by-brake. More specifically, the present disclosure relates to a method, apparatus and system for activating or deactivating a torque-sensitive LSD (mLSD) and torque vectoring by-brake control by controlling a torque vectoring by-brake control device by comparing an actual differential slip with a threshold value.

### BACKGROUND

The content described below merely provides background information related to the present embodiment and does not constitute prior art.

When a vehicle travels a corner, an appropriate differential function is essential to enable the vehicle to turn smoothly. However, when the vehicle accelerates while turning, a turning speed of the vehicle can be improved by detecting slip of an inner wheel of the turning and limiting the differential to transmit driving power to an outer wheel of the turning. Accordingly, recently, vehicles are equipped with a limited slip differential (LSD) device to control the driving power of a left wheel and a right wheel to improve handling performance and off-road performance. The LSD device actively and precisely controls the relative slip of the left wheel and the right wheel. The torque-sensitive LSD, also known as mechanical LSD (mLSD), is a particular typology of LSD that has the main characteristic to react to a torque difference between left and right wheel, differently to the speed-sensitive LSD (vLSD) that reacts to a speed difference between left and right wheel. The reaction time of mLSD is faster than the reaction time of vLSD. This very fast reaction time is achieved using a mechanism of self-locking gearings, with the limitation that torque transferred from the left and right wheels can only be a percent of the minimum drive torque that one of two wheels can transmit; this means that if one wheel is unable to transfer drive torque, because for instance is on polished ice, or is in the air , the mLSD will behave as an open differential and no torque will be transmitted from left to right wheel. Nevertheless, due to its fast reaction time, torque-sensitive mLSD is often the preferred choice in sport and high-performance applications. Torque-sensitive mLSD is a passive device, with locking mechanism only based on left wheel and right wheel states and cannot be controlled by a control device. However, the self-locking mechanism of the mLSD design can be influenced in some cases by applying external torque at one or at both wheels.

The torque vectoring control device is a device that independently and freely controls the amount of torque transmitted to the left and right wheels in order to improve the travel performance and handling performance of the vehicle. The torque vectoring is a technology for expressing both the magnitude and direction of the output or driving power of a driving device transmitted to the driving wheels of the vehicle, and changing the magnitude and direction of the torque transmitted to the wheels, especially the torque transmitted to the left and right wheels on the same axle line. The torque vectoring by-brake is a particular case of general torque vectoring technology, in which single-wheel brakig is used to prevent high slip on one wheel of an axle line, and this single-wheel braking actuation has also the effect to transmit driving torque on the other wheel of same axle line. An advantage of torque vectoring by-brake control is that it can use single-wheel brake actuation already available on all vehicles equipped with ESC (Electronic Stability Control). In this present disclosure, when referring to torque vectoring, it is always indended the particular case of torque vectoring by-brake.

When the LSD device is activated, understeer or oversteer may occur. Commonly used LSD devices (speed-sensitive LSD, torque-sensitive LSD, Electronically Controlled LSD) are aimed at improving traction by transfering driving torque from the faster wheel to the slower wheel of the axle but are not capable to control understeer or oversteer. On the contrary, their activation can induce understeer or oversteer, depending from driving scenario. The only LSD device capable to also directly control understeer or oversteer is the so called Torque-Vectoring LSD, which has the disadvantage of high complexity and large packaging. In particular, electric vehicles require high regenerative braking, which may also cause excessive oversteer or understeer in corners. In particular, the torque-sensitive mLSD has the fastest reaction time and this on one hand results in higher potential for improving traction, but on the other hand will increase the potential for inducing unwanted understeer or oversteer. Accordingly, research is needed to prevent unexpected understeer or oversteer when the vehicle including the mLSD device turns a corner, using the torque vectoring control device.

### SUMMARY

An object of the present disclosure is to gradually deactivate torque vectoring control and optimize operation of limited slip differential by comparing actual differential slip with a threshold value.

Additionally, according to one embodiment, an object of the present disclosure is to determine the threshold value to be compared with the actual differential slip.

Furthermore, according to one embodiment, an object of the present disclosure is to apply a method for improving the stability of directional cornering of a vehicle fitted with mLSD devices.

Objects to be solved by the present disclosure are not limited to the objects mentioned above, and other problems not mentioned will be clearly understood by those skilled in the art from the description below.

According to embodiments of the present disclosure, a method executed by a vehicle control device, the method includes activating torque vectoring by-brake control when a vehicle accelerates at a corner, calculating an actual differential slip of the vehicle and a threshold value, comparing the actual differential slip with the threshold value, maintaining the activation of the torque vectoring by-brake control when the actual differential slip is smaller than the threshold value and gradually deactivate the torque vectoring by-brake control when the actual differential slip is not smaller than the threshold value, and calculating traction inside a wheel of the vehicle and a traction threshold value when the actual differential slip is not smaller than the threshold value, and determining whether to activate the torque vectoring by-brake control to optimize the operation of limited slip differential (LSD) based on the traction inside the wheel and the traction threshold value and the traction threshold value is calculated by estimating a vertical force of the wheel of the vehicle and a lateral force of the wheel of the vehicle.

According to embodiments of the present disclosure, a method executed by a vehicle control device, the method includes activating torque vectoring by-brake control when a vehicle coasts at a corner, calculating an actual differential slip of the vehicle and a threshold value, comparing the actual differential slip with the threshold value, determining whether to activate the torque vectoring by-brake control based on whether the vehicle is in an understeer state when the actual differential slip is greater than the threshold value and gradually deactivating the torque vectoring by-brake control when the actual differential slip is not greater than the threshold value.

According to the present disclosure, it is possible to improve the stability of directional cornering of a vehicle.

Additionally, according to one embodiment, it is possible to reduce the risk of the vehicle transitioning from understeer to oversteer when traveling around a corner.

In addition, according to one embodiment, it is possible to improve the durability of limited slip differential (LSD) device mounted on a vehicle.

The effects obtainable from the present disclosure are not limited to the effects mentioned above, and other effects not mentioned will be clearly understood by a person skilled in the art to which the present disclosure belongs from the description below.

### BRIEF DESCRIPTION OF THE DRAWINGS

Fig. 1 is a block diagram illustrating a vehicle control system according to one embodiment of the present disclosure.
Fig. 2 is a flowchart illustrating a process of activating or deactivating torque vectoring control when a vehicle turns a corner, according to one embodiment of the present disclosure.
Fig. 3 is a flowchart illustrating a process of activating or deactivating torque vectoring control when a vehicle turns a corner, according to another embodiment of the present disclosure.
Fig. 4 is a flowchart illustrating a process of activating or deactivating torque vectoring control when a vehicle turns a corner while coasting according to one embodiment of the present disclosure.
Fig. 5 is a flowchart illustrating a method for improving stability of directional cornering of a vehicle when the vehicle accelerates at a corner according to one embodiment of the present disclosure.
Fig. 6 is a flowchart illustrating a method for improving stability of directional cornering of a vehicle when the vehicle coasts a corner according to one embodiment of the present disclosure.

### DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present disclosure and is not intended to represent the only embodiments in which the present disclosure may be practiced.

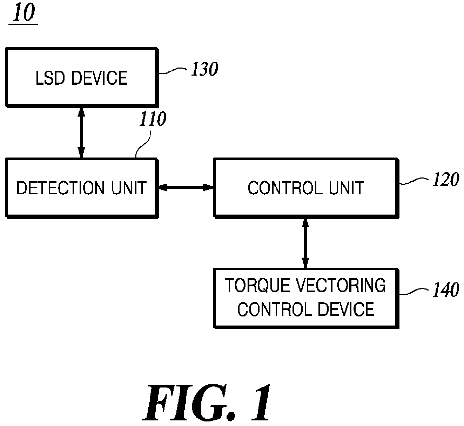

Fig. 1 is a block diagram illustrating a vehicle control system according to one embodiment of the present disclosure.

Referring to Fig. 1, the vehicle control system 10 includes all or part of a detection unit 110, a control unit 120, an mLSD (torque-sensitive Limited Slip Differential) passive device 130, and a torque vectoring control device 140. The vehicle control system 10 and each component thereof may be implemented as hardware or software, or may be implemented as a combination of hardware and software. In addition, the function of each component may be implemented as software, and one or more processors may be implemented to execute the function of the software corresponding to each component.

The detection unit 110 detects a travel status of the vehicle, an angular velocity of a wheel, a speed of the wheel, and a cornering radius of the wheel. The control unit 120 compares actual differential slip with a threshold value and transmits a control signal to the torque vectoring control device 140. The actual differential slip is a difference between left wheel slip and right wheel slip based on an axle and may be an actual grip level difference between the left and right tires. Here, the slip may be a value based on the difference between the travel speed and the wheel speed of the vehicle. The control unit 120 determines the threshold value using a distance between the left and right tires, a left wheel speed, a right wheel speed, a radius of the tire, the cornering radius of the wheel, and the angular velocity of the vehicle. When the actual differential slip is smaller than the threshold value, the control unit 120 controls the torque vectoring control device 140 so that the activation of the torque vectoring by-brake control is maintained. When the actual differential slip is not smaller than the threshold value, the control unit 120 the torque vectoring control device 140 to gradually deactivate the torque vectoring by-brake control. The control unit 120 may be a vehicle control device of the present disclosure.

The LSD device 130 may transmit a larger torque to an inner wheel than to an outer wheel, thereby transmitting a larger driving force to the inner wheel and inducing understeer. Here, the understeer means that the vehicle turns smaller than handling of a driver. Or, the LSD device may 130 transmit a larger torque to the outer wheel than to the inner wheel, thereby transmitting a larger driving force to the outer wheel, then inducing oversteer. Here, the oversteer means that the vehicle turns more than the handling of the driver. The LSD device 130 includes a torque-sensitive LSD device. The LSD device 130 does not include a Torque-Vectoring LSD device, or a speed sensitive LSD device, or an electronically controlled LSD device. The speed-sensitive LSD device (not included in LSD device 130) is a device that activates the LSD according to the difference between the left wheel speed and the right wheel speed based on the axle. A torque-sensitive LSD device activates the LSD according to the difference in torque between the left and right wheels based on the axle. An electronically controlled LSD device (not included in LSD device 130) distributes driving power to slower wheel of the axle using electronic control logic. A Torque-Vectoring LSD device (not included in LSD device 130) freey distributes driving power to the left and right wheels of the axle, independently of their relative speed, using electronic control logic.

The torque vectoring control device 140 independently and freely controls the amount of torque transmitted by the faster wheel to the slower wheel of the axle. In the process of controlling the amount of torque, the travel speed, steering angle, yaw rate, lateral acceleration, wheel speed, or the like of the vehicle may be monitored. The torque vectoring control device 140 adjusts the amount of torque transmitted to the left wheel and the right wheel while applying braking force by the brake. The torque vectoring control device 140 may directly reduce the amount of torque transmitted to the inner wheel and indirectly increase the amount of torque transmitted to the outside wheel when the vehicle turns a corner, thereby causing the vehicle to enter an oversteer state. When the vehicle turns a corner, in a case where the torque vectoring control device 140 performs torque vectoring by-brake control and then is gradually phased out, , the vehicle may gradually enter an oversteer state. Accordingly, the vehicle can be prevented from transitioning from an understeer state to an oversteer state.

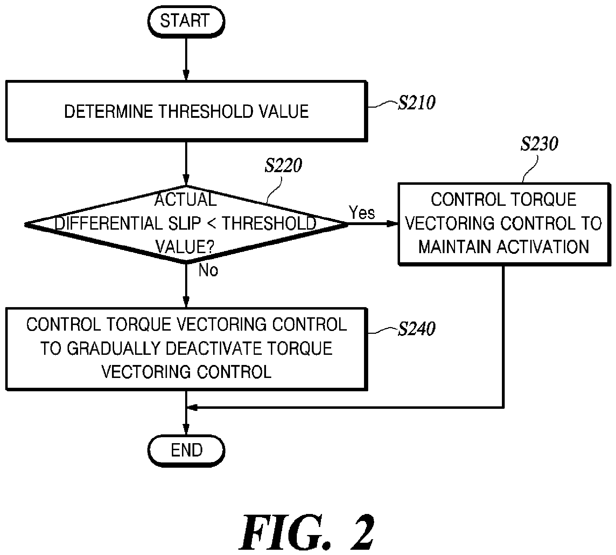

Fig. 2 is a flowchart illustrating a process of activating or deactivating the torque vectoring control when the vehicle turns a corner, according to one embodiment of the present disclosure.

Referring to Fig. 2, when the vehicle travels by acceleration from a corner, the control unit 120 determines the threshold value (S210). This case is a case when the driver is stepping on an accelerator pedal of the vehicle. When the vehicle travels by acceleration from a corner, the torque vectoring by-brake control is preferentially activated. The threshold value may be determined based on ΔTiresGrip_{LockedLSD}, and ΔTiresGrip_{LockedLSD} may be expressed as Mathematical Formula 1. $Δ TiresGri {p}_{LockedLSD} = \frac{ψ ∗ track}{\frac{\left({ω}_{1}+{ω}_{2}\right)}{2} ∗ r}$

Here, w₁ may be an angular velocity of the left wheel of the vehicle, w₂ may be an angular velocity of the right wheel of the vehicle, respectively. r may be a radius of the wheel of the vehicle, track may be a distance between the left wheel and the right wheel. ψ may be an angular velocity of the vehicle turning the corner. The control unit 120 determines a value corresponding to a predetermined ratio of ΔTiresGrip_{LockedLSD} as the threshold value. For example, the control unit 120 may determine a value corresponding to 70% of ΔTiresGrip_{LockedLSD} as the threshold value.

The control unit 120 determines whether the actual differential slip is smaller than the threshold value (S220). ΔTiresGrip_{actual} which is the actual differential slip may be expressed as Mathematical Formula 2. $Δ TiresGri {p}_{actual} = {Tire}_{SlipL} - {Tire}_{SlipR} = \frac{{ω}_{L} ∗ r - {Vx}_{L}}{{ω}_{L} ∗ r} - \frac{{ω}_{R} ∗ r - {Vx}_{R}}{{ω}_{R} ∗ r}$

Here, w_{L} may be the angular velocity of the left wheel of the vehicle and w_{R} may be the angular velocity of the right wheel of the vehicle. r may be a radius of the wheel of the vehicle, Vx_{L} may be a tangential velocity of the left wheel, and Vx_{R} may be a tangential velocity of the right wheel. Vx_{L} may be calculated by multiplying the angular velocity of the vehicle turning a corner by the cornering radius of the left wheel. Vx_{R} may be calculated by multiplying the angular velocity of the vehicle turning a corner by the cornering radius of the right wheel.

When it is determined that the actual differential slip is smaller than the threshold value (S220-YES), the control unit 120 controls the torque vectoring by-brake control device 140 to maintain the activation of the torque vectoring by-brake control (S230). When it is determined that the actual differential slip is not smaller than the threshold value (S220-NO), the control unit 120 controls the torque vectoring control device 140 to gradually deactivate the torque vectoring by-brake control (S240). The torque vectoring by-brake control may be completely deactivated when the actual differential slip becomes equal to ΔTiresGrip_{LockedLSD}.

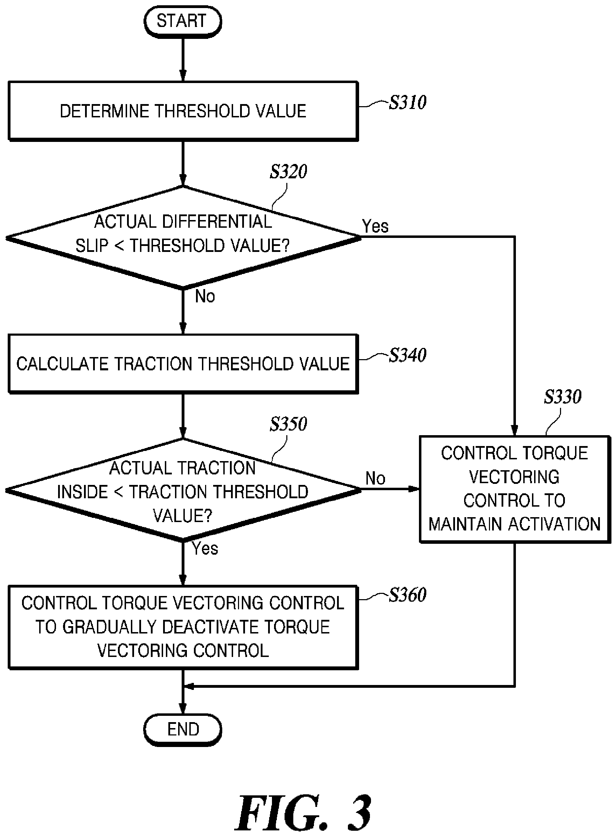

Fig. 3 is a flowchart illustrating a process of activating or deactivating the torque vectoring control when a vehicle turns a corner, according to another embodiment of the present disclosure.

Referring to Fig. 3, when the vehicle travels by acceleration at a corner, the control unit 120 determines the threshold value (S310). This is the case when the driver is pressing the accelerator pedal of the vehicle. When the vehicle travels by acceleration at a corner, the torque vectoring by-brake control is preferentially activated. The threshold value may be determined based on ΔTiresGrip_{LockedLSD}. The control unit 120 determines a value corresponding to a predetermined ratio of ΔTiresGrip_{LockedLSD} as the threshold value. For example, the control unit 120 may determine a value corresponding to 70% of ΔTiresGrip_{LockedLSD} as the threshold value.

The control unit 120 determines whether the actual differential slip is smaller than the threshold value (S320). When it is determined that the actual differential slip is smaller than the threshold value (S320-YES), the control unit 120 controls the torque vectoring control device 140 to maintain the activation of the torque vectoring by-brake control (S330). When it is determined that the actual differential slip is not smaller than the threshold value (S320-NO), the control unit 120 calculates a traction threshold value (S340). The control unit 120 may estimate a vertical force of the wheel according to the Kamm's Circle theory, assume the limit of the friction force as a circle, and calculate the traction threshold value that can be generated within a friction limit by estimating a lateral force currently generated from the wheel.

The control unit 120 determines whether the actual traction inside the wheel is smaller than the traction threshold value (S350). When it is determined that the actual traction inside the wheel is not smaller than the traction threshold value (S350-NO), the control unit 120 controls the torque vectoring control device 140 to maintain the activation of the torque vectoring by-brake control (S330), and by doing so, guarantees that the mLSD will stay in locked state. When it is determined that the actual traction inside the wheel is smaller than the traction threshold value (S350-YES), the control unit 120 controls the torque vectoring control device 140 to gradually deactivate the torque vectoring by-brake control (S360), because in this situation the mLSD will stay in locked state on its own. The torque vectoring by-brake control may be completely deactivated when the actual differential slip becomes equal to ΔTiresGrip_{LockedLSD}. Here, the LSD device 130 may be a torque-sensitive LSD device.

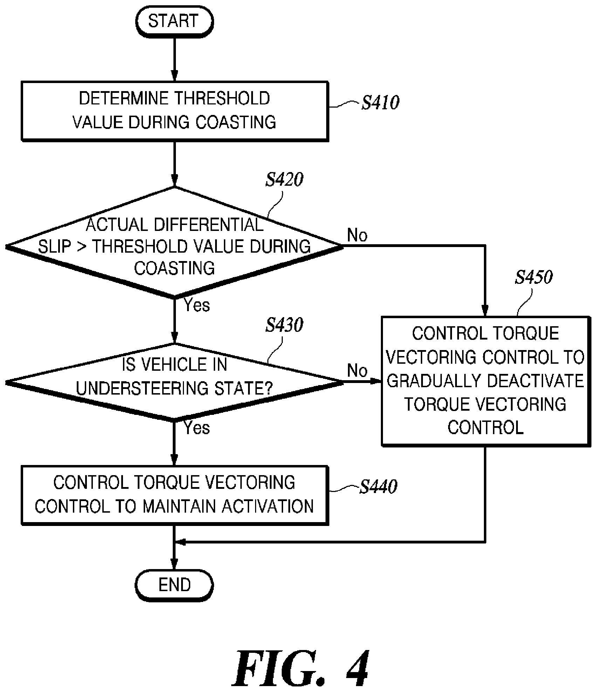

Fig. 4 is a flowchart illustrating a process of activating or deactivating the torque vectoring control when a vehicle turns a corner while coasting according to one embodiment of the present disclosure.

Referring to Fig. 4, when the vehicle coasts at a corner, the control unit 120 determines a threshold value during the coasting (S410). This is the case when the driver does not step on the accelerator pedal of the vehicle. When the vehicle coasts at a corner, the torque vectoring by-brake control is preferentially activated. The threshold value during the coasting is determined based on ΔTiresGrip_{coasting}, and ΔTiresGrip_{coasting} may be expressed as Mathematical Formula 3. $Δ TiresGri {p}_{coasting} = \frac{\frac{\left({ω}_{1}+{ω}_{2}\right)}{2} ∗ r ∗ track}{ψ ∗ R 1 ∗ R 2}$

Here, w₁ and w₂ may be the angular velocity of the left wheel and the angular velocity of the right wheel, respectively. r may be the radius of the wheel, and track may be the distance between the left wheel and the right wheel. ψ may be the angular velocity of the vehicle turning a corner. R1 may be the cornering radius of the left wheel, and R2 may be the cornering radius of the right wheel. The control unit 120 determines a value corresponding to a predetermined ratio of ΔTiresGrip_{coasting} as the threshold value during the coasting. For example, the control unit 120 may determine a value corresponding to 70% of ΔTiresGrip_{coasting} as the threshold value during the coasting. With vehicles having large negative torques during coasting, for instance Electric Vehicles with regenerative function, the control unit 120 may determine a lower value, for example corresponding to 10% of ΔTiresGrip_{coasting} as the threshold value during the coasting

The control unit 120 determines whether the actual differential slip is greater than the threshold value during the coasting (S420). When it is determined that the actual differential slip is greater than the threshold value during the coasting (S420-YES), the control unit 120 determines whether the vehicle is in an understeering state (S430). When it is determined that the vehicle is in an understeering state (S430-YES), the control unit 120 controls the torque vectoring control device 140 to maintain the activation of the torque vectoring by-brake control (S440). When it is determined that the vehicle is not in the understeering state (S430-NO), the control unit 120 controls the torque vectoring control device 140 to gradually deactivate the torque vectoring by-brake control (S450).

When it is determined that the actual differential slip is not greater than the threshold value during the coasting (S420-NO), the control unit 120 controls the torque vectoring control device 140 to gradually deactivate the torque vectoring by-brake control (S450). The torque vectoring by-brake control may be completely deactivated when the actual differential slip becomes equal to ΔTiresGrip_{coasting}. Here, the LSD device 130 may be a torque-sensitive LSD device.

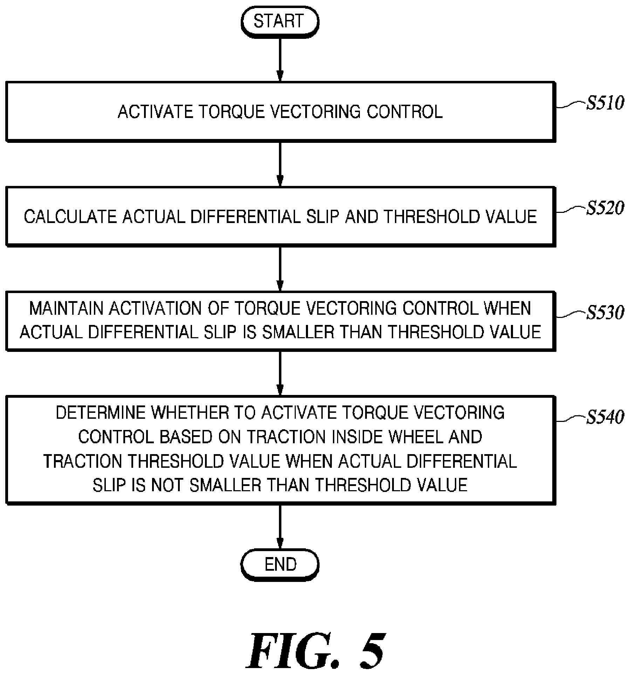

Fig. 5 is a flowchart illustrating a method for improving stability of directional cornering of a vehicle when the vehicle accelerates at a corner according to one embodiment of the present disclosure.

Referring to Fig. 5, the control unit 120 activates torque vectoring by-brake control when the vehicle accelerates at a corner (S510). The control unit 120 calculates the actual differential slip of the vehicle and the threshold value (S520). The threshold value may be calculated based on ΔTiresGrip_{LockedLSD}. A value corresponding to a predetermined ratio of ΔTiresGrip_{LockedLSD} may be determined as the threshold value. Here, the predetermined ratio may be 70%. The control unit 120 compares the actual differential slip with the threshold value. The control unit 120 maintains the activation of the torque vectoring control when the actual differential slip is smaller than the threshold value (S530). The control unit 120 calculates the traction inside the wheel of the vehicle and the traction threshold value when the actual differential slip is not smaller than the threshold value, and determines whether to activate the torque vectoring by-brake control based on the traction inside the wheel of the vehicle and the traction threshold value (S540). The traction threshold value can be calculated by estimating the vertical force of the wheel of the vehicle and the lateral force of the wheel of the vehicle.

The process of determining whether to activate the torque vectoring by-brake control may include a process of maintaining the activation of the torque vectoring by-brake control when the traction inside the wheel is not smaller than the traction threshold value, and a process of gradually deactivating the torque vectoring by-brake control when the traction inside the wheel is smaller than the traction threshold value. Here, the LSD device 130 may be a torque-sensitive LSD device.

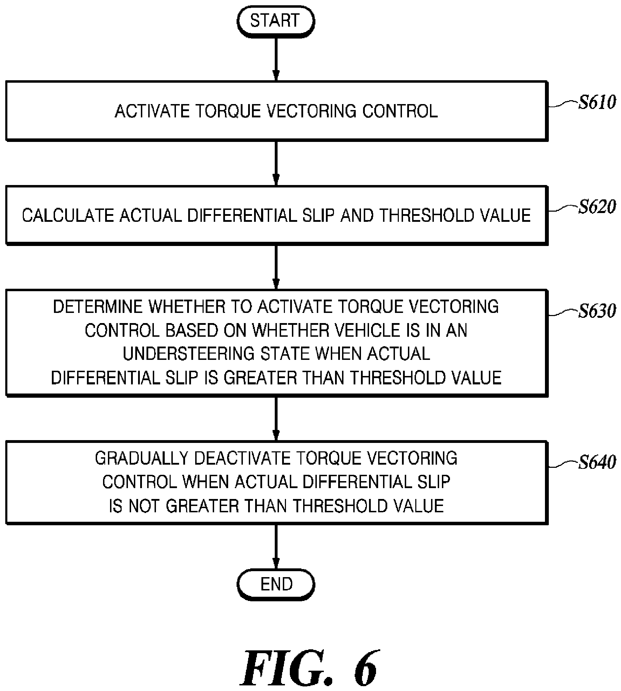

Fig. 6 is a flowchart illustrating a method for improving stability of directional cornering of a vehicle when the vehicle coasts a corner according to one embodiment of the present disclosure.

Referring to Fig. 6, the vehicle control unit 120 activates the torque vectoring by-brake control when the vehicle coasts at a corner (S610). The control unit 120 calculates the actual differential slip of the vehicle and a threshold value (S620). The threshold value may be calculated based on ΔTiresGrip_{coasting}. A value corresponding to a predetermined ratio of ΔTiresGrip_{coasting} may be determined as the threshold value when coasting. Here, the predetermined ratio can be 70%. The control unit 120 compares the actual differential slip with the threshold value. The control unit 120 determines whether to activate the torque vectoring by-brake control based on whether the vehicle is in an understeering state when the actual differential slip is greater than the threshold value (S630). When the actual differential slip is not greater than the threshold value, the control unit 120 gradually deactivates the torque vectoring by-brake control (S640).

The process of determining whether to activate the torque vectoring by-brake control may include a process of gradually deactivating the torque vectoring by-brake control when the vehicle is not in an understeering state and a process of maintaining the activation of the torque vectoring by-brake control when the vehicle is in an understeering state. Here, the LSD device 130 may be a torque-sensitive LSD device.

## Claims

1. A method executed by a vehicle control device, the method comprising:
activating torque vectoring by-brake control when a vehicle accelerates at a comer;
calculating an actual differential slip of the vehicle and a threshold value;
comparing the actual differential slip with the threshold value;
maintaining the activation of the torque vectoring by-brake control when the actual differential slip is smaller than the threshold value; and
calculating traction inside a wheel of the vehicle and a traction threshold value when the actual differential slip is not smaller than the threshold value, and determining whether to activate the torque vectoring by-brake control based on the traction inside the wheel and the traction threshold value,
wherein the traction threshold value is calculated by estimating a vertical force of the wheel of the vehicle and a lateral force of the wheel of the vehicle.

2. The method of claim 1, wherein determining whether to activate the torque vectoring by-brake control comprises:
maintaining the activation of the torque vectoring by-brake control when the traction inside the wheel is not smaller than the traction threshold value, and
gradually deactivating the torque vectoring by-brake control when the traction inside the wheel is smaller than the traction threshold value.

3. The method of claim 1, or 2, wherein the actual differential slip is calculated based on the following mathematical formula. $Δ TiresGri {p}_{actual} = \frac{{ω}_{L} ∗ r - {Vx}_{L}}{{ω}_{L} ∗ r} - \frac{{ω}_{R} ∗ r - {Vx}_{R}}{{ω}_{R} ∗ r}$ here, w_{L} is an angular velocity of a left wheel of the vehicle, w_{R} is an angular velocity of a right wheel of the vehicle, r is a radius of a wheel of the vehicle, Vx_{L} is a tangential velocity of the left wheel, and Vx_{R} is a tangential velocity of the right wheel.

4. The method of claim 3, wherein the Vx_{L} is calculated by multiplying the angular velocity of the vehicle turning a corner by a cornering radius of the left wheel, and the Vx_{R} is calculated by multiplying the angular velocity of the vehicle turning the corner by a cornering radius of the right wheel.

5. The method of claim 1, wherein calculating the threshold value comprises:
calculating an intermediate value based on the following mathematical formula, $Δ TiresGri {p}_{LockedLSD} = \frac{ψ ∗ track}{\frac{\left({ω}_{1}+{ω}_{2}\right)}{2} ∗ r}$
here, w₁ is an angular velocity of a left wheel of the vehicle, w₂ is an angular velocity of a right wheel of the vehicle, r is a radius of a wheel of the vehicle, track is a distance between the left wheel and the right wheel, and ψ is an angular velocity of the vehicle turning the corner, and
determining a value corresponding to a predetermined ratio of the intermediate value as the threshold value.

6. A method executed by a vehicle control device, the method comprising:
activating torque vectoring by-brake control when a vehicle coasts at a corner;
calculating an actual differential slip of the vehicle and a threshold value;
comparing the actual differential slip with the threshold value;
determining whether to activate the torque vectoring by-brake control based on whether the vehicle is in an understeering state when the actual differential slip is greater than the threshold value; and
gradually deactivating the torque vectoring by-brake control when the actual differential slip is not greater than the threshold value.

7. The method of claim 6, wherein determining whether to activate the torque vectoring by-brake control comprises:
gradually deactivating the torque vectoring by-brake control when the vehicle is not in an understeering state, and
maintaining the activation of the torque vectoring by-brake control when the vehicle is in an understeering state.

8. The method of claim 6, or 7, wherein the actual differential slip is calculated based on the following mathematical formula. $Δ TiresGri {p}_{actual} = \frac{{ω}_{L} ∗ r - {Vx}_{L}}{{ω}_{L} ∗ r} - \frac{{ω}_{R} ∗ r - {Vx}_{R}}{{ω}_{R} ∗ r}$ here, w_{L} is an angular velocity of a left wheel of the vehicle, w_{R} is an angular velocity of a right wheel of the vehicle, r is a radius of a wheel of the vehicle, Vx_{L} is a tangential velocity of the left wheel, and Vx_{R} is a tangential velocity of the right wheel.

9. The method of claim 8, wherein the Vx_{L} is calculated by multiplying the angular velocity of the vehicle turning a corner by a cornering radius of the left wheel, and the Vx_{R} is calculated by multiplying the angular velocity of the vehicle turning the corner by a cornering radius of the right wheel.

10. The method of claim 6, wherein the calculating of the threshold value includes calculating an intermediate value based on the following mathematical formula, $Δ TiresGri {p}_{coasting} = \frac{\frac{\left({ω}_{1}+{ω}_{2}\right)}{2} ∗ r ∗ track}{ψ ∗ R 1 ∗ R 2}$
here, w₁ is an angular velocity of a left wheel of the vehicle, w₂ is an angular velocity of a right wheel of the vehicle, r is a radius of a wheel of the vehicle, track is a distance between the left wheel and the right wheel, ψ is an angular velocity of the vehicle turning the corner, R1 is a cornering radius of the left wheel, and R2 is a cornering radius of the right wheel, and
determining a value corresponding to a predetermined ratio of the intermediate value as the threshold value.
